# EUROPEAN PATENT APPLICATION

(11) **EP 4 492 488 A2**
(43) Date of publication of application: **15.01.2025**
(21) Application number: 24185964.4
(22) Date of filing: 02.07.2024
(51) Int. Cl.: H01M 4/131, H01M 4/525, H01M 4/62, H01M 10/0525, H01M 10/0567, H01M 4/02

(54) **NONAQUEOUS ELECTROLYTE SECONDARY BATTERY**

(30) Priority: 12.07.2023 JP 2023114326
(71) Applicant: Prime Planet Energy & Solutions, Inc., Chuo-ku Tokyo 103-0022 (JP)
(72) Inventor: UEHARA, Yukitoshi, Tokyo, 103-0022 (JP)
(74) Representative: Kuhnen & Wacker Patent- und Rechtsanwaltsbüro PartG mbB

(57) **Abstract**

Provided is a nonaqueous electrolyte secondary battery having excellent initial resistance characteristics and storage characteristics despite small pores of a positive electrode active material layer. The nonaqueous electrolyte secondary battery includes a positive electrode, a negative electrode, and a nonaqueous electrolyte. The positive electrode includes a positive electrode current collector, and a positive electrode active material layer supported on the positive electrode current collector. The positive electrode active material layer includes a positive electrode active material and a conductive material. The positive electrode active material layer has a peak pore diameter of 0.50 µm to 0.70 µm. A content of the conductive material in the positive electrode active material layer is 0.2 % by mass to 1.0% by mass. 80 % by mass or more of the conductive material is carbon nanotubes. The nonaqueous electrolyte includes a nonaqueous solvent, an electrolyte salt, and a positive electrode film forming agent.

## Description

### TECHNICAL FIELD

The present disclosure relates to a nonaqueous electrolyte secondary battery.

### BACKGROUND

Recent nonaqueous electrolyte secondary batteries such as lithium ion secondary batteries are suitably used for portable power supplies for devices such as personal computers and portable terminals, vehicle driving power supplies for vehicles such as battery electric vehicles (BEVs), hybrid electric vehicles (HEVs), and plug-in hybrid electric vehicles (PHEVs), and so forth.

A positive electrode used for a nonaqueous electrolyte secondary battery such as a lithium ion secondary battery typically has a configuration in which a positive electrode active material layer is disposed on a positive electrode current collector. The positive electrode active material layer contains positive electrode active material particles, and the positive electrode active material layer includes pores formed of gaps between the positive electrode active material particles (see, for example, Patent Documents 1 through 3). A technique known to date is to make a nonaqueous electrolyte include an additive for forming a film on a positive electrode (also referred to as a so-called "positive electrode film forming agent" or a "positive electrode additive") in order to enhance performance of a nonaqueous electrolyte secondary battery (see, for example, Patent Document 2).

### CITATION LIST

### PATENT DOCUMENTS

Patent Document 1: Japanese Patent Application Publication No. 2015-069822
Patent Document 2: International PublicationWO2021/186949
Patent Document 3: International Publication WO2023/054308

### SUMMARY

With a rapidly increasing demand for BEVs, secondary batteries for drive power supplies for the BEVs are required to have further enhanced performance. A known method for enhancing the performance is to increase the density of a positive electrode active material layer. Through an intensive study of an inventor of the present disclosure, it has been found that the increase in density of the positive electrode active material layer involves the following problems. That is, when the density of the positive electrode active material layer is increased, the pore diameter of the positive electrode active material layer becomes excessively small, and accordingly, the positive electrode film forming agent does not easily permeate the pores of the positive electrode active material layer deeply. Consequently, the film is not likely to be uniformly formed in the positive electrode active material layer, which causes a degradation of durability of the nonaqueous electrolyte secondary battery. Specifically, capacity during storage of the nonaqueous electrolyte secondary battery significantly deteriorates. In addition, high initial resistance characteristics are required of secondary batteries used for vehicle drive power supplies.

Embodiments of the present disclosure provide nonaqueous electrolyte secondary batteries having excellent initial resistance characteristics and storage characteristics despite small pores of a positive electrode active material layer.

A nonaqueous electrolyte secondary battery disclosed here includes a positive electrode, a negative electrode, and a nonaqueous electrolyte. The positive electrode includes a positive electrode current collector, and a positive electrode active material layer supported on the positive electrode current collector. The positive electrode active material layer includes a positive electrode active material and a conductive material. The positive electrode active material layer has a peak pore diameter of 0.50 µm to 0.70 µm. A content of the conductive material in the positive electrode active material layer is 0.2 % by mass to 1.0 % by mass. 80 % by mass or more of the conductive material is carbon nanotubes. The nonaqueous electrolyte contains a nonaqueous solvent, an electrolyte salt, and a positive electrode film forming agent.

This configuration can provide a nonaqueous electrolyte secondary battery having excellent initial resistance characteristics and storage characteristics despite small pores of a positive electrode active material layer.

### BRIEF DESCRIPTION OF THE DRAWINGS

FIG. 1 is a cross-sectional view schematically illustrating an internal structure of a lithium ion secondary battery according to one embodiment of the present disclosure.
FIG. 2 is a schematic disassembled view illustrating a structure of a wound electrode body of a lithium ion secondary battery according to one embodiment of the present disclosure.

### DETAILED DESCRIPTION

Embodiments of the present disclosure will be described hereinafter with reference to the drawings. Matters not specifically mentioned herein but required for carrying out the present disclosure can be understood as matters of design of a person skilled in the art based on related art in the field. The present disclosure can be carried out on the basis of the contents disclosed in the description and common general knowledge in the field. In the drawings, members and parts having the same functions are denoted by the same reference characters for description. Dimensional relationships (e.g., length, width, and thickness) in the drawings do not reflect actual dimensional relationships. A numerical range expressed as "A to B" herein includes A and B.

It should be noted that a "secondary battery" herein refers to an electricity storage device capable of being repeatedly charged and discharged. A "lithium ion secondary battery" herein refers to a secondary battery that uses lithium ions as charge carriers and performs charge and discharge by movement of charges accompanying lithium ions between positive and negative electrodes. A "battery electric vehicle (BEV)" herein refers to a vehicle including a motor operated by a secondary battery as a power source and does not include an internal combustion engine such as a gasoline engine.

The present disclosure will be described in detail hereinafter using a flat square lithium ion secondary battery including a flat wound electrode body and a flat battery case as an example, but the present disclosure is not intended to be limited to the embodiment.

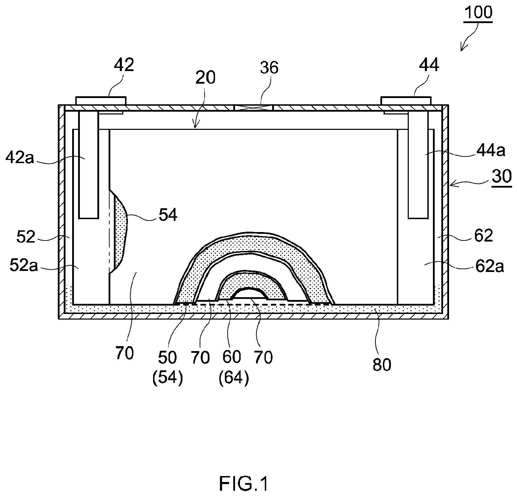

A lithium ion secondary battery 100 illustrated in FIG. 1 is a sealed battery in which a flat wound electrode body 20 and a nonaqueous electrolyte 80 are housed in a flat square battery case (i.e., outer container) 30. The battery case 30 includes a positive electrode terminal 42 and a negative electrode terminal 44 for external connection, and a thin safety valve 36 configured such that when the internal pressure of the battery case 30 increases to a predetermined level or more, the safety valve 36 releases the internal pressure. The battery case 30 has an injection port (not shown) for injecting the nonaqueous electrolyte 80. The positive electrode terminal 42 is electrically connected to a positive electrode current collector plate 42a. The negative electrode terminal 44 is electrically connected to a negative electrode current collector plate 44a. A material for the battery case 30 is, for example, a metal material that is lightweight and has high thermal conductivity, such as aluminum. FIG. 1 does not strictly illustrate the amount of the nonaqueous electrolyte 80.

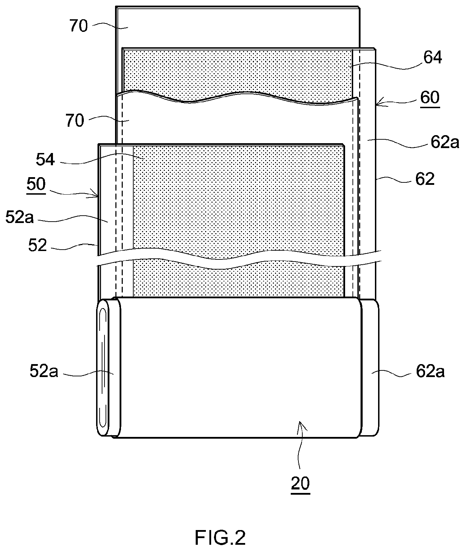

As illustrated in FIGS. 1 and 2, in the wound electrode body 20, a positive electrode sheet 50 and a negative electrode sheet 60 are stacked with two long separator sheets 70 interposed therebetween and are wound in the longitudinal direction. In the positive electrode sheet 50, a positive electrode active material layer 54 is formed on one or each (each in this example) surface of a long positive electrode current collector 52 along the longitudinal direction. In the negative electrode sheet 60, a negative electrode active material layer 64 is formed on one or each (each in this example) surface of a long negative electrode current collector 62 along the longitudinal direction. A positive electrode active material layer non-formed portion 52a (i.e., a portion where no positive electrode active material layer 54 is formed and the positive electrode current collector 52 is exposed) and a negative electrode active material layer non-formed portion 62a (i.e., a portion where no negative electrode active material layer 64 is formed and the negative electrode current collector 62 is exposed) extend off outward from both ends of the wound electrode body 20 in the winding axis direction (i.e., sheet width direction orthogonal to the longitudinal direction). The positive electrode current collector plate 42a and the negative electrode current collector plate 44a are respectively joined to the positive electrode active material layer non-formed portion 52a and the negative electrode active material layer non-formed portion 62a.

The positive electrode current collector 52 constituting the positive electrode sheet 50 may be a known positive electrode current collector for use in a lithium ion secondary battery, and examples of the positive electrode current collector 52 include sheets or foil of highly conductive metals (e.g., aluminum, nickel, titanium, and stainless steel). The positive electrode current collector 52 is desirably aluminum foil.

Dimensions of the positive electrode current collector 52 are not particularly limited, and may be appropriately determined depending on battery design. In the case of using aluminium foil as the positive electrode current collector 52, the thickness thereof is not particularly limited, and is, for example, 5 µm or more and 35 µm or less, desirably 7 µm or more and 20 µm or less.

The positive electrode active material layer 54 includes a positive electrode active material and a conductive material. The positive electrode active material may be a known positive electrode active material to be used in a lithium ion secondary battery. Specifically, for example, as the positive electrode active material, a material such as a lithium composite oxide or a lithium transition metal phosphate compound may be used. The crystal structure of the positive electrode active material is not particularly limited, and may be, for example, a layered structure, a spinel structure, or an olivine structure.

The lithium composite oxide is desirably a lithium transition metal composite oxide including at least one of Ni, Co, or Mn as a transition metal element, and specific examples of the lithium transition metal composite oxide include a lithium nickel composite oxide, a lithium cobalt composite oxide, a lithium manganese composite oxide, a lithium nickel manganese composite oxide, a lithium nickel cobalt manganese composite oxide, a lithium nickel cobalt aluminum composite oxide, and a lithium iron nickel manganese composite oxide.

It should be noted that the "lithium nickel cobalt manganese composite oxide" herein includes not only oxides including Li, Ni, Co, Mn, and O as constituent elements, but also an oxide further including one or more additive elements besides them. Examples of the additive elements include transition metal elements and typical metal elements such as Mg, Ca, Al, Ti, V, Cr, Y, Zr, Nb, Mo, Hf, Ta, W, Na, Fe, Zn, and Sn. The additive element may be a metalloid element such as B, C, Si, or P, and a nonmetal element such as S, F, Cl, Br, or I. This also applies, in the same manner, to the lithium nickel composite oxide, the lithium cobalt composite oxide, the lithium manganese composite oxide, the lithium nickel manganese composite oxide, the lithium nickel cobalt aluminium composite oxide, and the lithium iron nickel manganese composite oxide described above.

Examples of the lithium transition metal phosphate compound include lithium iron phosphate (LiFePO₄), lithium manganese phosphate (LiMnPO₄), and lithium manganese iron phosphate.

These positive electrode active materials can be used alone or two or more of them may be used in combination. The positive electrode active material is especially desirably the lithium nickel cobalt manganese composite oxide because of excellent characteristics such as initial resistance characteristics.

The positive electrode active material is particulate, and an average particle size (median particle size: D50) of the positive electrode active material is not particularly limited, and is, for example, 0.05 µm or more and 25 µm or less, desirably 1 µm or more and 20 µm or less, more desirably 3 µm or more and 15 µm or less. It should be noted that the average particle size (D50) of the positive electrode active material can be determined by, for example, a laser diffraction scattering method.

A content of the positive electrode active material in the positive electrode active material layer 54 (i.e., content of the positive electrode active material with respect to the total mass of the positive electrode active material layer 54) is not particularly limited, and is, for example, 80 % by mass or more, desirably 87 % by mass or more, more desirably 90 % by mass or more, even more desirably 95 % by mass or more, much more desirably 97 % by mass or more.

In this embodiment, at least carbon nanotubes (CNTs) are used as a conductive material of the positive electrode active material layer 54, and a content of the CNTs in the conductive material is 80 % by mass or more. The CNTs are generally dispersed in the form of a single particle and/or an aggregate in the positive electrode active material layer 54 together with the positive electrode active material. When the conductive material contains 80 % by mass or more of CNTs, initial resistance of the lithium ion secondary battery 100 can be reduced. That is, initial resistance characteristics of the lithium ion secondary battery can be enhanced.

The type of the CNTs to be used is not particularly limited, and single-walled carbon nanotubes (SWCNTs), double-walled carbon nanotubes (DWCNTs), multi-walled carbon nanotubes (MWCNTs), and so forth can be used. These carbon nanotubes may be used alone or two or more types of them may be used in combination. As the CNTs, MWCNTs are desirable. The CNTs may be produced by a method such as an arc discharge method, a laser ablation method, or a chemical vapor deposition method.

An average length of the CNTs is not particularly limited. If the average length of the CNTs is excessively long, the CNTs are agglomerated to be less dispersed, and the effect of uniformly disposing the positive electrode film forming agent in the positive electrode active material layer 54 might degrade. In view of this, the average length of the CNTs is desirably 10 µm or less, more desirably 5.0 µm or less, even more desirably 3.0 µm or less, still more desirably 1.0 µm or less. On the other hand, if the average length of the CNTs is excessively small, the number of CNTs per a unit mass is excessively small, and a conductive path between positive electrode active materials might be less likely to be formed. In view of this, the average length of the CNTs is desirably 0.1 µm or more, more desirably 0.2 µm or more, even more desirably 0.3 µm or more.

An average diameter of the CNTs is not particularly limited. If the average diameter of the CNTs is excessively large, the number of CNTs per a unit mass is excessively small, and a conductive path between positive electrode active materials might be less likely to be formed. In view of this, the average diameter of the CNTs is desirably 50 nm or less, more desirably 40 nm or less, even more desirably 30 nm or less. On the other hand, if the average diameter of the CNTs is excessively small, a hollow diameter of the CNTs is excessively small, and the effect of enhancing impregnating ability of the nonaqueous electrolyte 80 by capillary action might degrade. In view of this, the average diameter of the CNTs is desirably 1 nm or more, more desirably 5 nm or more, even more desirably 8 nm or more.

More desirably, the average length of the CNTs is 0.3 µm to 1.0 µm, and the average diameter of the CNTs is 8 nm to 30 nm.

The average length and the average diameter of the CNTs can be determined by taking an electron micrograph of the CNTs, and obtaining average values of lengths and diameters of 100 or more CNTs, for example. Specifically, for example, a CNT dispersion is diluted and then dried, thereby preparing a measurement sample. This sample is observed with a scanning electron microscope (SEM), lengths and diameters of 100 or more CNTs are obtained, and averages of the obtained lengths and diameters are calculated. At this time, if CNTs are agglomerated again, a length and a diameter of the aggregate of the CNTs are obtained.

Examples of the conductive material other than the CNTs include carbon materials (e.g., carbon black such as acetylene black (AB), graphite, etc.). Among these materials, carbon black is desirable, and acetylene black is especially desirable.

From the viewpoint of especially high initial resistance characteristics of the lithium ion secondary battery 100, the proportion of CNTs in the conductive material is desirably 90 % by mass or more, more desirably 100 % by mass (that is, the conductive material consists only of CNTs).

The content of the conductive material in the positive electrode active material layer 54 is 0.2 % by mass to 1.0 % by mass. This significance will be described later. The content of the conductive material in the positive electrode active material layer 54 is desirably 0.4 % by mass to 1.0 % by mass. In this range, resistance increase of the lithium ion secondary battery 100 in long-term storage is highly suppressed.

The positive electrode active material layer 54 may include components other than the positive electrode active material, such as trilithium phosphate, a binder, and a carbon nanotube disperser (CNT disperser). Examples of the binder include polyvinylidene fluoride (PVdF).

Examples of the CNT disperser include a surfactant-type disperser (also called a low molecular disperser), a polymeric disperser, and an inorganic disperser. The CNT disperser may be anionic, cationic, amphoteric, or nonionic. Thus, the CNT disperser may have, in the molecular structure thereof, at least one functional group selected from the group consisting of an anionic group, a cationic group, and a nonionic group. It should be noted that the surfactant refers to an amphiphilic substance with a chemical structure in which a hydrophilic part and a lipophilic part are included in a molecule structure and are bound together by a covalent bond.

Specific examples of the CNT disperser include: polycondensed aromatic surfactants such as a naphthalenesulfonic acid formalin condensate sodium salt, a naphthalenesulfonic acid formalin condensate ammonium salt, and a methyl naphthalenesulfonic acid formalin condensate sodium salt; polycarboxylic acid and a salt thereof such as polyacrylic acid and a salt thereof and polymethacrylic acid and a salt thereof; triazine derivative dispersers (desirably a disperser including a carbazolyl group or a benzimidazolyl group); polyvinylpyrrolidone (PVP); polymers having a polynuclear aromatic group such as pyrene or anthracene in a side chain; and polynuclear aromatic ammonium derivatives such as a pyrene ammonium derivative (e.g., a compound in which an ammonium bromide group is introduced into pyrene) and an ammonium anthracene derivative. These CNT dispersers may be used alone or two or more of them may be used in combination. The CNT disperser desirably includes a polynuclear aromatic group. Specifically, the CNT disperser is desirably a polymer having a polynuclear aromatic group in a side chain, and a polynuclear aromatic ammonium derivative.

A content of trilithium phosphate in the positive electrode active material layer 54 is not particularly limited, and is desirably 1% by mass or more and 15% by mass or less, more desirably 2% by mass or more and 12% by mass or less. A content of the binder in the positive electrode active material layer 54 is not particularly limited, and is desirably 0.1 % by mass or more and 10 % by mass or less, more desirably 0.2 % by mass or more and 5 % by mass or less, even more desirably 0.3 % by mass or more and 2 % by mass or less.

A content of the CNT disperser may be appropriately determined depending on the types of CNTs and the CNT disperser. Here, if the proportion of the CNT disperser is excessively small, dispersibility might be insufficient. On the other hand, if the proportion of the CNT disperser is excessively large, the CNT disperser excessively adheres to the CNT surface, and thereby causing the possibility of a resistance increase. In a case where the CNTs are SWCNTs, the amount of the CNT disperser to be used is, for example, 1 part by mass to 400 parts by mass, desirably 20 parts by mass to 200 parts by mass, with respect to 100 parts by mass of CNTs. In a case where the CNTs are MWNTs, the amount of the CNT disperser to be used is, for example, 1 part by mass to 100 parts by mass, desirably 4 parts by mass to 40 parts by mass, with respect to 100 parts by mass of the CNTs.

The positive electrode active material layer 54 has pores in which gaps between positive electrode active material particles communicate with each other. In this embodiment, the positive electrode active material layer 54 has a peak pore diameter of 0.50 µm to 0.70 µm. In this embodiment, the positive electrode active material layer 54 has such a small pore size. However, when the positive electrode active material layer 54 contains 0.2 % by mass to 1.0 % by mass of the conductive material including 80 % by mass or more of CNTs, storage characteristics of the lithium ion secondary battery 100 can be increased.

Since the content of the conductive material is 0.2 % by mass or more and 80 % by mass or more of the conductive material is CNTs, capillary action caused by CNTs located in pores of the positive electrode active material layer 54 increases impregnating ability of the nonaqueous electrolyte 80 into the positive electrode active material layer 54. Consequently, the positive electrode film forming agent can be supplied together with the nonaqueous electrolyte 80 to pores of the positive electrode active material layer 54 deeply. As a result, the positive electrode film forming agent can be uniformly distributed in the positive electrode active material layer 54, and a film can be uniformly formed in the positive electrode active material layer 54 in initial charge of the lithium ion secondary battery 100. Accordingly, storage characteristics of the lithium ion secondary battery 100 can be enhanced. On the other hand, if the content of the conductive material is excessively large, that is, exceeds 1.0 % by mass, the nonaqueous electrolyte 80 is not easily distributed in pores because of the excessive conductive material. Thus, since the content of the conductive material is 1.0 % by mass or less in this embodiment, the positive electrode film forming agent can be uniformly distributed in the positive electrode active material layer 54, and high improvement in storage characteristics of the lithium ion secondary battery 100 described above can be obtained.

In addition, since the conductive material contains 80 % by mass or more of CNTs, an excellent conductive path is formed in the positive electrode active material layer 54, and initial resistance of the lithium ion secondary battery 100 can be reduced. Accordingly, initial resistance characteristics can be enhanced.

It should be noted that the peak pore diameter of the positive electrode active material layer 54 can be measured according to mercury intrusion porosimetry. Specifically, the peak pore diameter of the positive electrode active material layer 54 can be measured with a mercury porosimeter according to a known method.

Pores of the positive electrode active material layer 54 are formed by gaps between positive electrode active material particles. Thus, the peak pore diameter of the positive electrode active material layer 54 can be adjusted by controlling porosity of the positive electrode active material layer 54. As the porosity of the positive electrode active material layer 54 decreases, the peak pore diameter of the positive electrode active material layer 54 tends to be smaller. The porosity of the positive electrode active material layer 54 can be adjusted by, for example, changing pressing conditions of the positive electrode active material layer 54 in fabricating the positive electrode 50 or controlling the particle size of the positive electrode active material particles. Alternatively, the pore diameter can be reduced by disposing the conductive material in gaps between the positive electrode active material particles. Accordingly, the peak pore diameter of the positive electrode active material layer 54 can also be controlled in accordance with the amount of the conductive material used.

The porosity of the positive electrode active material layer 54 is desirably 15% by volume to 40% by volume, more desirably 15% by volume to 30% by volume, even more desirably 15% by volume to 25% by volume. The porosity of the positive electrode active material layer 54 can be measured according to mercury intrusion porosimetry. Specifically, the porosity of the positive electrode active material layer 54 can be measured with a mercury porosimeter according to a known method.

The thickness of the positive electrode active material layer 54 is not particularly limited, and is, for example, 10 µm or more and 400 µm or less, desirably 20 µm or more and 300 µm or less.

The density of the positive electrode active material layer 54 is not particularly limited, and is, for example, 2.00 g/cm³ to 4.00 g/cm³. From the viewpoint of high-volume energy density, the density of the positive electrode active material layer 54 is desirably 3.00 g/cm³ to 4.00 g/cm³, more desirably 3.40 g/cm³ to 4.00 g/cm³, even more desirably 3.50 g/cm³ to 4.00 g/cm³, especially desirably 3.60 g/cm³ to 4.00 g/cm³.

The positive electrode sheet 50 may include an insulating layer (not shown) at the boundary between the positive electrode active material layer non-formed portion 52a and the positive electrode active material layer 54. The insulating layer contains ceramic particles, for example.

As the negative electrode current collector 62 constituting the negative electrode sheet 60, a known negative electrode current collector for use in a lithium ion secondary battery may be used, and examples of the negative electrode current collector include sheets or foil of highly conductive metals (e.g., copper, nickel, titanium, and stainless steel). The negative electrode current collector 62 is desirably copper foil.

Dimensions of the negative electrode current collector 62 are not particularly limited, and may be appropriately determined depending on battery design. In the case of using copper foil as the negative electrode current collector 62, the thickness of the foil is not particularly limited, and is, for example, 5 µm or more and 35 µm or less, desirably 6 µm or more and 20 µm or less.

The negative electrode active material layer 64 contains a negative electrode active material. Examples of the negative electrode active material include carbon materials such as graphite, hard carbon, and soft carbon. Graphite may be natural graphite or artificial graphite, and may be amorphous carbon-coated graphite in which graphite is coated with an amorphous carbon material.

An average particle size (median particle size: D50) of the negative electrode active material is not particularly limited, and is, for example, 0.1 µm or more and 50 µm or less, desirably 1 µm or more and 25 µm or less, more desirably 5 µm or more and 20 µm or less. It should be noted that the average particle size (D50) of the negative electrode active material can be determined by, for example, a laser diffraction and scattering method.

The negative electrode active material layer 64 can include components other than the active material, such as a binder or a thickener. Examples of the binder include styrene-butadiene rubber (SBR) and polyvinylidene fluoride (PVdF). Examples of the thickener include carboxymethyl cellulose (CMC).

A content of the negative electrode active material in the negative electrode active material layer 64 is desirably 90% by mass or more, more desirably 95% by mass or more and 99% by mass or less. A content of the binder in the negative electrode active material layer 64 is desirably 0.1% by mass or more and 8% by mass or less, more desirably 0.5% by mass or more and 3% by mass or less. A content of the thickener in the negative electrode active material layer 64 is desirably 0.3% by mass or more and 3% by mass or less, more desirably 0.5% by mass or more and 2% by mass or less.

The thickness of the negative electrode active material layer 64 is not particularly limited, and is, for example, 10 µm or more and 400 µm or less, desirably 20 µm or more and 300 µm or less.

Examples of the separators 70 include porous sheets (film) of resins such as polyethylene (PE), polypropylene (PP), polyester, cellulose, and polyamide. The porous sheet may have a single-layer structure or a laminated structure of two or more layers (e.g., three-layer structure in which a PP layer is stacked on each surface of a PE layer). A heat-resistance layer (HRL) containing, for example, ceramic particles may be provided on a surface of the separator 70.

The thickness of the separator 70 is not particularly limited, and is, for example, 5 µm or more and 50 µm or less, desirably 10 µm or more and 30 µm or less. An air permeability of the separators 70 obtained by a Gurley permeability test is not particularly limited, and is desirably 350 sec./100 cc or less.

The nonaqueous electrolyte 80 includes a nonaqueous solvent, an electrolyte salt (i.e., supporting electrolyte), and a positive electrode film forming agent.

As the nonaqueous solvent, various organic solvents such as carbonates, ethers, esters, nitriles, sulfones, and lactones for use in an electrolyte of a typical lithium ion secondary battery can be used without any particular limitation. Among these solvents, carbonates and esters are desirable, and specific examples thereof include ethylene carbonate (EC), propylene carbonate (PC), diethyl carbonate (DEC), dimethyl carbonate (DMC), ethyl methyl carbonate (EMC), monofluoroethylene carbonate (MFEC), difluoroethylene carbonate (DFEC), monofluoromethyl difluoromethyl carbonate (F-DMC), trifluorodimethyl carbonate (TFDMC), methyl acetate, and methyl propionate. Such nonaqueous solvents may be used alone or two or more of them may be used in combination. The nonaqueous solvent consists of carbonates, for example. The nonaqueous solvent consists of carbonates and esters, for example.

Desired examples of the electrolyte salt include lithium salts (desirably LiPF₆) such as LiPF₆, LiBF₄, and lithium bis(fluorosulfonyl)imide (LiFSI). A concentration of the electrolyte salt in the nonaqueous electrolyte 80 is desirably 0.7 mol/L or more and 1.3 mol/L or less.

The positive electrode film forming agent is a component that forms a film in the positive electrode active material layer 54 (especially on the surfaces of the positive electrode active material particles) in initial charge of the lithium ion secondary battery 100, and is also referred to as a positive electrode additive. As the positive electrode film forming agent, at least one compound selected from the group consisting of lithium difluorophosphate (LiPO₂F₂) and lithium fluorosulfate (LiSO₃F) is desirably used. The use of these materials enhances especially storage characteristics of the lithium ion secondary battery 100.

The concentration of the positive electrode film forming agent in the nonaqueous electrolyte 80 is not particularly limited, and is, for example, 0.05 % by mass to 2.0 % by mass, desirably 0.1 % by mass to 1.8 % by mass, more desirably 0.3 % by mass to 1.5 % by mass.

The nonaqueous electrolyte 80 may include components not described above, for example, various additives exemplified by: a negative electrode film forming agent such as vinylene carbonate (VC) or an oxalato complex; a gas generating agent such as biphenyl (BP) or cyclohexylbenzene (CHB); and a thickener, to the extent that the effects of the present disclosure are not significantly impaired.

In the lithium ion secondary battery 100, capacity degradation in long-term storage is suppressed despite small pores of the positive electrode active material layer. In addition, in the lithium ion secondary battery 100, resistance increase in long-term storage is suitably suppressed. Accordingly, the lithium ion secondary battery 100 has excellent storage characteristics. The lithium ion secondary battery 100 also has excellent input characteristics. Further, reaction distribution in the positive electrode 50 tends to be uniform, and accordingly, lithium is less likely to be precipitated on the surface of the negative electrode 60, and the capacity is less likely to degrade.

The lithium ion secondary battery 100 is applicable to various applications. Examples of desired applications include drive power supplies to be mounted on vehicles such as battery electric vehicles (BEVs), hybrid electric vehicles (HEVs), and plug-in hybrid electric vehicles (PHEVs). The lithium ion secondary battery 100 can be used as a storage battery for, for example, a small-size power storage device. Thus, the lithium ion secondary battery 100 is especially desirably applicable to a drive power supply of a BEV. The lithium ion secondary battery 100 can be used in a form of a battery module in which a plurality of batteries are typically connected in series and/or in parallel.

The foregoing description is directed to the square lithium ion secondary battery 100 including the flat wound electrode body 20 as an example. Alternatively, the lithium ion secondary battery can also be fabricated as a lithium ion secondary battery including a stacked-type electrode body (i.e., electrode body in which a plurality of positive electrodes and a plurality of negative electrodes are alternately stacked). The lithium ion secondary battery can also be fabricated as a cylindrical lithium ion secondary battery or a laminated-case lithium ion secondary battery.

The secondary battery according to this embodiment can be configured as a nonaqueous secondary battery other than a lithium ion secondary battery according to a known method.

Examples of the present disclosure will now be described in detail, but are not intended to limit the present disclosure to these examples.

### [Examples 1 to 3 and Comparative Examples 1 to 8]

First, LiNi_{1/3}Co_{1/3}Mn_{1/3}O₂ as a positive electrode active material, a conductive material, and a PVdF as a binder were mixed at a mass ratio of active material : conductive material: PVdF = 99.5-x:x:0.5. As the conductive material, MWCNTs (average diameter: 13 nm, average length: 0.5 µm) and acetylene black were used. The MWCNTs were used in the form of a dispersion, and the dispersion contained a pyrene ammonium salt as a CNT disperser. In Table 1, x1 represents a mass ratio of MWCNTs, x2 represents a mass ratio of AB, and a sum of x1 and x2 is a mass ratio x of the conductive material.

An appropriate amount of N-methyl-2-pyrrolidone was added to the resulting mixture, thereby preparing positive electrode slurry. The positive electrode slurry was applied to each surface of aluminium foil with a thickness of 13 µm as a positive electrode current collector. At this time, as a lead connection portion, a positive electrode slurry uncoated portion was provided on the aluminium foil. The amount of application of the positive electrode slurry was adjusted such that a weight per unit area of the resulting positive electrode active material layer is 45 mg/cm² in total at both surfaces.

The applied slurry was dried, thereby forming a positive electrode active material layer. The obtained sheet was pressed with rollers so that the density of the positive electrode active material layer was thereby increased and the porosity of the positive electrode active material layer was adjusted to 21 % by volume. The porosity was measured with a commercially available mercury porosimeter. The sheet was then cut into a predetermined size, thereby obtaining a positive electrode in which the positive electrode active material layer was formed on each surface of the positive electrode current collector.

Graphite as a carbon-based negative electrode active material, a sodium salt (CMC-Na) of carboxymethyl cellulose, and a dispersion of styrene-butadiene rubber (SBR) were mixed at a solid content mass ratio of graphite : CMC-Na : CMC = 98:1:1. Ion-exchanged water was further added to this mixture, thereby preparing negative electrode slurry. The negative electrode slurry was applied to each surface of copper foil with a thickness of 8 µm as a negative electrode current collector. At this time, as a lead connection portion, a negative electrode slurry uncoated portion was provided on the copper foil.

The applied paste was dried, thereby forming a negative electrode active material layer. The obtained sheet was pressed with rollers, and then cut into predetermined dimensions, thereby obtaining a negative electrode in which the negative electrode active material layer was formed on each surface of the negative electrode current collector. The negative electrode active material layer had a packing density of 1.50 g/cm³.

A lead was attached to each of the positive and negative electrodes fabricated as described above. A single-layer polypropylene separator was prepared. Positive electrodes and negative electrodes were alternately stacked one by one with a separator interposed therebetween, thereby producing a stacked-type electrode body.

A mixed solvent including ethylene carbonate (EC), dimethyl carbonate (DMC), and ethyl methyl carbonate (EMC) at a volume ratio of 30:40:30 was prepared. In this mixed solvent, vinylene carbonate was dissolved at a concentration of 1 % by mass, lithium bis(oxalate)borate was dissolved at a concentration of 0.8 % by mass, lithium fluorosulfate as a positive electrode film forming agent was dissolved at a concentration of 1.5 % by mass, and LiPF₆ as a supporting electrolyte was dissolved at a concentration of 1.15 mol/L. However, in Comparative Example 8, no positive electrode film forming agent was added. In this manner, a nonaqueous electrolyte was obtained.

The thus-obtained stacked-type electrode body and nonaqueous electrolyte were housed in a squared battery case and sealed, thereby obtaining a square evaluation lithium ion secondary battery. The amount of injection of the nonaqueous electrolyte was 2.05 g/Ah.

### <Peak Pore Diameter Measurement>

With a commercially available mercury porosimeter ("AutoPore V9620" manufactured by Micromeritics), a peak pore diameter (µm) of the positive electrode active material layer of the positive electrode fabricated as described above was obtained. Table 1 shows the results.

### <PC Impregnation Velocity Evaluation>

On the positive electrode active material layer of the positive electrode fabricated as described above, 3 µL of a propylene carbonate (PC) solvent was dropped with a micropipet. A time (second) until all the PC solvent was absorbed in the positive electrode active material layer after the dropping was measured by visual observation. This measurement was performed 20 times, and an average of the measured values was employed as a PC impregnation time. Table 1 shows the results. It should be noted that as the PC impregnation time is shorter, the PC impregnation velocity is higher, and the positive electrode active material layer is more easily impregnated with the nonaqueous electrolyte.

### <Initial Resistance Characteristic Evaluation - Input Resistance Measurement>

Each evaluation lithium ion secondary battery was adjusted to have a state of charge (SOC) of 50% by constant current - constant voltage (CC-CV) charging, and then, placed in an environment of 25°C. Then, the secondary battery was charged at a current value of 4 C for 10 seconds, and a voltage rise amount ΔV at this time was acquired. This voltage rise amount ΔV and the current value were used to calculate an input resistance value (initial input resistance) of each evaluation secondary battery. Table 1 shows the results.

### <Storage Characteristic Evaluation>

Each evaluation lithium ion secondary battery was placed in an environment of 25°C, and charged to 4.25V with CC-CV charging (0.01 C cut-off) to be adjusted to have an SOC of 100%. Thereafter, the secondary battery was subjected to CC-CV discharging (0.01 C cut-off) to 3 V at a current value of 1/3 C. A discharge capacity at this time was measured and used as an initial capacity.

Next, each evaluation lithium ion secondary battery was adjusted to have an SOC of 95%, and stored for 45 days in a thermostat at 60°C. Thereafter, in a manner similar to the initial capacity, a discharge capacity was measured. From (discharge capacity after storage/initial capacity) × 100, a capacity retention rate (%) was calculated. Table 1 shows the results.

An input resistance value of each evaluation lithium ion secondary battery after storage was measured by the same method as described above. As a resistance increase rate, a value of (input resistance after storage/initial input resistance) was calculated. Table 1 shows the results. In Comparative Example 7, since initial input resistance was high, storage characteristics were not evaluated.

### <Measurement of Positive Electrode Film Forming Agent Residual Concentration>

Each evaluation lithium ion secondary battery was placed in an environment of 25°C, and charged to 4.25 V with CC-CV charging to be adjusted to have an SOC of 100%. Thereafter, the secondary battery was subjected to CC-CV discharging to 3 V at a current value of 1/3 C. Then, each evaluation lithium ion secondary battery was disassembled, and a nonaqueous electrolyte was collected. A residual concentration of a positive electrode film forming agent in the nonaqueous electrolyte was measured with a benchtop NMR spectrometer "X-Pulse" (with an autosampler "X-Auto") manufactured by Oxford Instruments. Table 1 shows the results.

[Table 1]

**Table 1**

| | Conductive Material | | Positive Electrode Active Material Layer Peak Pore Diameter (*µ*m) | PC Impregnation Time (sec.) | Positive Electrode film Forming Agent Residual Concentration (% by mass) | Initial Input Resistance (mΩ) | Storage Characteristics | |
|---|---|---|---|---|---|---|---|---|
| | MWCNT x1 (% by mass) | AB x2 (% by mass) | | | | | Capacity Retention Rate (%) | Resistance Increase Rate |
| Comparative Example 1 | 1.5 | 0.0 | 0.412 | 1300 | 0.6 | 0.56 | 94.5 | 1.20 |
| Example 1 | 1.0 | 0.0 | 0.574 | 790 | 0.4 | 0.48 | 95.3 | 1.09 |
| Example 2 | 0.4 | 0.0 | 0.658 | 400 | 0.3 | 0.48 | 95.2 | 1.10 |
| Example 3 | 0.2 | 0.0 | 0.681 | 270 | 0.3 | 0.49 | 95.1 | 1.17 |
| Comparative Example 2 | 0.0 | 2.0 | 0.441 | 1050 | 0.8 | 0.57 | 94.6 | 1.15 |
| Comparative Example 3 | 0.0 | 1.5 | 0.559 | 800 | 0.7 | 0.57 | 94.7 | 1.16 |
| Comparative Example 4 | 0.0 | 1.0 | 0.593 | 730 | 0.7 | 0.60 | 94.3 | 1.25 |
| Comparative Example 5 | 0.0 | 0.5 | 0.607 | 670 | 0.6 | 0.72 | 94.1 | 1.31 |
| Comparative Example 6 | 0.0 | 0.0 | 0.707 | 169 | Battery evaluation impossible because of excessively high resistance | | | |
| Comparative Example 7 | 0.5 | 0.6 | 0.507 | 950 | 0.7 | 0.58 | - | - |
| Comparative Example 8 | 1.0 | 0.0 | 0.574 | 790 | not used | 0.75 | 93.8 | 1.35 |

Results of Comparative Examples 2 to 6 show that as the peak pore diameter of the positive electrode active material layer increases, the PC impregnation time decreases, that is, impregnating ability of the nonaqueous electrolyte increases. Comparative Examples 2 to 5 are examples using only AB for the conductive material. In Comparative Examples 2 to 5, as the AB amount decreases, the peak pore diameter increases, impregnating ability of the nonaqueous electrolyte increases, and a larger amount of the positive electrode film forming agent is consumed for forming a film. In Comparative Examples 2 to 5, as the AB amount decreases, both input characteristics and storage characteristics degrade.

On the other hand, Examples 1 to 3 and Comparative Example 1 are examples using only CNTs for the conductive material. A comparison with Comparative Examples 2 to 6 shows that in the case of using CNTs for the conductive material, a tendency different from the case of using AB was obtained. Specifically, in a case where the content of CNTs was 0.2 % by mass to 1.0 % by mass, the residual concentration of the positive electrode film forming agent was uniquely low, and input resistance was low and storage characteristics were excellent. This is supposed to be because the CNTs enables the positive electrode film forming agent to permeate pores of the positive electrode active material layer deeply, so that a film can be thereby formed uniformly in the positive electrode active material layer.

A comparison between Comparative Example 7 and Examples 1 to 3 shows that only in the case where the content of CNTs in the conductive material is large, reduction of input resistance and enhancement of storage characteristics can be achieved.

From the foregoing result, it can be understood that the nonaqueous electrolyte secondary battery disclosed here have excellent input characteristics and storage characteristics despite small pores of the positive electrode active material layer.

Specific examples of the present disclosure have been described in detail hereinbefore, but are merely illustrative examples, and are not intended to limit the scope of claims. The techniques described in claims include various modifications and changes of the above exemplified specific examples.

That is, the nonaqueous electrolyte secondary battery disclosed here is items [1] to [6].
[1] A nonaqueous electrolyte secondary battery including:
   a positive electrode;
   a negative electrode; and
   a nonaqueous electrolyte, wherein
   the positive electrode includes a positive electrode current collector, and a positive electrode active material layer supported on the positive electrode current collector,
   the positive electrode active material layer includes a positive electrode active material and a conductive material,
   the positive electrode active material layer has a peak pore diameter of 0.50 µm to 0.70 µm,
   a content of the conductive material in the positive electrode active material layer is 0.2 % by mass to 1.0 % by mass,
   80 % by mass or more of the conductive material is carbon nanotubes, and
   the nonaqueous electrolyte includes a nonaqueous solvent, an electrolyte salt, and a positive electrode film forming agent.
[2] The nonaqueous electrolyte secondary battery of item [1] in which the conductive material consists only of the carbon nanotubes.
[3] The nonaqueous electrolyte secondary battery of item [1] or [2] in which the positive electrode film forming agent is at least one compound selected from the group consisting of lithium difluorophosphate and lithium fluorosulfate.
[4] The nonaqueous electrolyte secondary battery of any one of items [1] to [3] in which the content of the conductive material in the positive electrode active material layer is 0.4 % by mass to 1.0 % by mass.
[5] The nonaqueous electrolyte secondary battery of any one of items [1] to [4] in which the carbon nanotubes have an average length of 0.3 µm to 1.0 µm, and an average diameter of 8 nm to 30 nm.
[6] The nonaqueous electrolyte secondary battery of any one of items [1] to [5] in which the nonaqueous electrolyte secondary battery is a vehicle drive power supply for a battery electric vehicle.

## Claims

1. A nonaqueous electrolyte secondary battery (100) comprising:
a positive electrode (50);
a negative electrode (60); and
a nonaqueous electrolyte (80), wherein
the positive electrode (50) includes a positive electrode current collector (52), and a positive electrode active material layer (54) supported on the positive electrode current collector (52),
the positive electrode active material layer (54) includes a positive electrode active material and a conductive material,
the positive electrode active material layer (54) has a peak pore diameter of 0.50 µm to 0.70 µm,
a content of the conductive material in the positive electrode active material layer (54) is 0.2 % by mass to 1.0 % by mass,
80 % by mass or more of the conductive material is carbon nanotubes, and
the nonaqueous electrolyte (80), includes a nonaqueous solvent, an electrolyte salt, and a positive electrode film forming agent.

2. The nonaqueous electrolyte secondary battery (100) according to claim 1, wherein the conductive material consists only of the carbon nanotubes.

3. The nonaqueous electrolyte secondary battery (100) according to claim 1, wherein the positive electrode film forming agent is at least one compound selected from the group consisting of lithium difluorophosphate and lithium fluorosulfate.

4. The nonaqueous electrolyte secondary battery (100) according to claim 1, wherein the content of the conductive material in the positive electrode active materi al layer (54) is 0.4 % by mass to 1.0 % by mass.

5. The nonaqueous electrolyte secondary battery (100) according to claim 1, wherein the carbon nanotubes have an average length of 0.3 µm to 1.0 µm, and an average diameter of 8 nm to 30 nm.

6. The nonaqueous electrolyte secondary battery (100) according to claim 1, wherein the nonaqueous electrolyte secondary battery is a vehicle drive power supply for a battery electric vehicle.
